# EUROPEAN PATENT APPLICATION

(11) **EP 4 032 741 A1**
(43) Date of publication of application: **27.07.2022**
(21) Application number: 20896947.7
(22) Date of filing: 02.12.2020
(51) Int. Cl.: B60L 15/20, B60W 30/18

(54) **CONTROL METHOD AND DEVICE FOR NEW ENERGY VEHICLE**

(30) Priority: 03.12.2019 CN 201911221532
(71) Applicant: Great Wall Motor Company Limited, Baoding, Hebei 071000 (CN)
(72) Inventor: ZHANG, Shuai, Baoding, Hebei 071000 (CN); SHAN, Mingyuan, Baoding, Hebei 071000 (CN); LIU, Xiu, Baoding, Hebei 071000 (CN); HOU, Wentao, Baoding, Hebei 071000 (CN); LI, Tianyang, Baoding, Hebei 071000 (CN); WU, Di, Baoding, Hebei 071000 (CN); DENG, Weifeng, Baoding, Hebei 071000 (CN)
(74) Representative: dompatent von Kreisler Selting Werner - Partnerschaft von Patent- und Rechtsanwälten mbB
(86) International application number: PCT/CN2020/133307
(87) International publication number: WO 2021/110025

(57) **Abstract**

The present application relates to the technical field of new energy vehicles, and provides a method and an apparatus for controlling a new energy vehicle. The control method comprises: detecting whether a single pedal control mode is activated; and controlling the new energy vehicle to enter a creep mode according to at least one of a gear position of the new energy vehicle, an action of a brake pedal of the new energy vehicle, and a speed of new energy vehicle, when it is detected the signal pedal control mode is activated. The present application is able to control the switch of the creep mode according to the driving intention.

## Description

### CROSS-REFERNECE TO RELATED APPLICATIONS

This application claims the priority benefit to Chinese Patent Application No. 201911221532.7 filed Dec. 3, 2019, and titled "METHOD AND APPARATUS FOR CONTROLLING NEW ENERGY VEHICLE", the contents of which are incorporated herein by reference.

### TECHNICAL FIELD

The present application to the technical field of new energy vehicles, and more particularly to a method and an apparatus for controlling a new energy vehicle.

### BACKGROUND

The existing new energy vehicle has the function of single pedal control, that is, the acceleration, constant speed, and deceleration control of the new energy vehicle can be achieved by an accelerator pedal, thus reducing the use frequency of the brake pedal. The vehicle in the single pedal control mode may have a creep mode (low speed travel mode); however, the switch of the creep mode is not intelligent.

### SUMMARY

In view of the above, it is an objective of the present application to provide a method for controlling a new energy vehicle, so as to control the switch of the creep mode according to the driving intention.

To achieve the above objective, the present application adopts the following technical solutions:
A method for controlling a new energy vehicle is provided. The control method comprises:
detecting whether a single pedal control mode is activated; and
controlling the new energy vehicle to enter a creep mode according to at least one of a gear position of the new energy vehicle, an action of a brake pedal of the new energy vehicle, and a speed of new energy vehicle, when it is detected the signal pedal control mode is activated.

Optionally, said controlling the new energy vehicle to enter a creep mode according to at least one of a gear position of the new energy vehicle, an action of a brake pedal of the new energy vehicle, and a speed of new energy vehicle comprises: controlling the new energy vehicle to enter the creep mode, in the case that the gear position of the new energy vehicle is a reverse gear position.

Optionally, said controlling the new energy vehicle to enter a creep mode according to at least one of a gear position of the new energy vehicle, an action of a brake pedal of the new energy vehicle, and a speed of new energy vehicle comprises: controlling the new energy vehicle to enter the creep mode, in the case that the gear position of the new energy vehicle is a drive gear position, the speed is smaller than a preset speed, and after the brake pedal is switched from a depressed state to a fully released state.

Optionally, said controlling the new energy vehicle to enter a creep mode according to at least one of a gear position of the new energy vehicle, an action of a brake pedal of the new energy vehicle, and a speed of new energy vehicle comprises: controlling the new energy vehicle to enter the creep mode, in the case that the gear position of the new energy vehicle is shifted to the drive gear position.

Optionally, the control method further comprises: prohibiting the new energy vehicle from entering the creep mode, in the case that the gear position of the new energy vehicle is a drive gear position, and after an accelerator pedal of the new energy vehicle is switched from a depressed state to a fully released state.

Compared with the existing technology, the method for controlling a new energy vehicle provided by embodiments of the present application has the following advantages:
It is firstly detected whether a single pedal control mode is activated. When it is detected the signal pedal control mode is activated, the new energy vehicle is controlled to enter the creep mode according to at least one of the gear position of the new energy vehicle, the action of the brake pedal of the new energy vehicle, and the speed of new energy vehicle. The method provided by the present application is able to judge the driving intention of the driver according to the gear position of the new energy vehicle, the action of the brake pedal of the new energy vehicle, and the speed of new energy vehicle, so as to control the switch of the creep mode according to the driving intention.

It is another objective of the present application to provide an apparatus for controlling a new energy vehicle, so as to control the entering to the creep mode according to the driving intention.

To achieve the above objective, the present application adopts the following technical solutions:
An apparatus for controlling a new energy vehicle is provided. The control apparatus comprises: a detection module and a control module. The detection module is configured for detecting whether a single pedal control mode is activated. The control module is configured for controlling the new energy vehicle to enter a creep mode according to at least one of a gear position of the new energy vehicle, an action of a brake pedal of the new energy vehicle, and a speed of new energy vehicle, when it is detected the signal pedal control mode is activated.

Optionally, the control module is further configured for: controlling the new energy vehicle to enter the creep mode, in the case that the gear position of the new energy vehicle is a reverse gear position.

Optionally, the control module is further configured for: controlling the new energy vehicle to enter the creep mode, in the case that the gear position of the new energy vehicle is a drive gear position, the speed is smaller than a preset speed, and after the brake pedal is switched from a depressed state to a fully released state.

Optionally, the control module is further configured for: controlling the new energy vehicle to enter the creep mode, in the case that the gear position of the new energy vehicle is shifted to the drive gear position.

Optionally, the control module is further configured for: prohibiting the new energy vehicle from entering the creep mode, in the case that the gear position of the new energy vehicle is a drive gear position, and after an accelerator pedal of the new energy vehicle is switched from a depressed state to a fully released state.

Compared with the existing technology, the control apparatus for a new energy vehicle has the same advantages as the above-described control method for a new energy vehicle, which will not be repeated herein.

It is still another objective of the present application to provide a new energy vehicle which is able to enter the creep mode according to the driving intention.

To achieve the above objective, the present application adopts the following technical solutions:
A new energy vehicle is provided. The new energy vehicle comprises the above-described apparatus for controlling a new energy vehicle.

Compared with the existing technology, the new energy vehicle has the same advantages as the above-described control apparatus for a new energy vehicle has the same advantages as the control method for a new energy vehicle, which will not be repeated herein.

It is still another objective of the present application to provide a machine-readable storage medium, which is able to control the new energy vehicle to enter the creep mode according to the driving intention.

To achieve the above objective, the present application adopts the following technical solutions:
A machine-readable storage medium is provided. The machine-readable storage medium stores instructions configured for causing a machine to execute the above-described method for controlling a new energy vehicle.

Compared with the existing technology, the machine-readable storage medium has the same advantages as the above-described control method for a new energy vehicle, which will not be repeated herein. Other technical features and advantages of the present application will be described in detail in the following detailed description of the embodiments.

### BRIEF DESCRIPTION OF THE DRAWINGS

The accompanying drawings constituting a part of the present disclosure are used to provide further understanding of the present disclosure, and the schematic embodiments of the present disclosure and descriptions thereof are used to explain the present disclosure and do not constitute an improper limitation of the present disclosure. In the attached image:
FIG. 1 is a flow chart of a method for controlling a new energy vehicle according to an embodiment of the present application;
FIG. 2 is a schematic diagram showing control of a new energy vehicle according to an embodiment of the present application;
FIG. 3 is a schematic diagram showing control of a new energy vehicle according to another embodiment of the present application;
FIG. 4 is a schematic diagram showing control of a new energy vehicle according to still another embodiment of the present application;
FIG. 5 is a schematic diagram showing control of a new energy vehicle according to still another embodiment of the present application; and
FIG. 6 is a schematic block diagram of an apparatus for controlling a new energy vehicle according to an embodiment of the present application.

In the drawings, the following reference numerals are adopted:
1: Detection module; and 2: Control module.

### DETAILED DESCRIPTION OF THE EMBODIMENTS

It should be noted that embodiments of the present application as well as technical features involved in the embodiments may be combined with one another unless those embodiments or technical features thereof are conflict.

Technical solutions of the present application will be described in details with reference to the drawings in conjunction with embodiments.

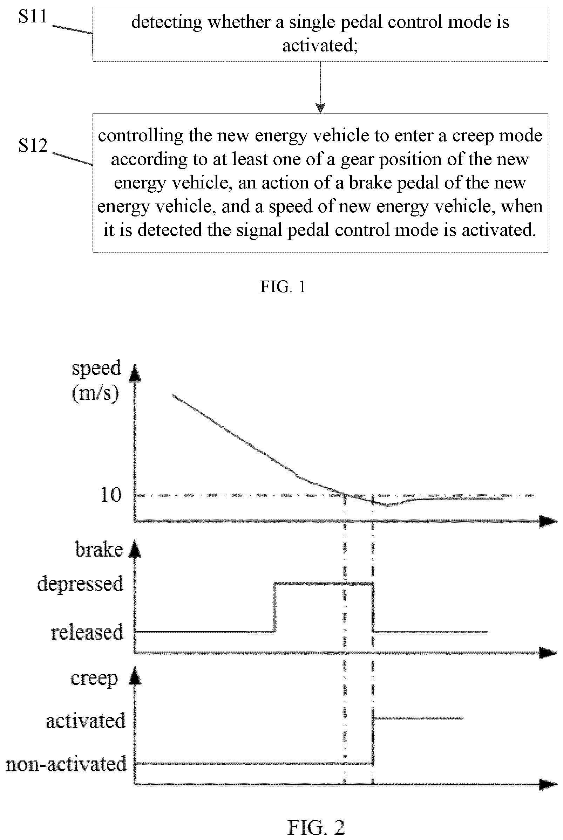

FIG. 1 is a flow chart of a method for controlling a new energy vehicle according to an embodiment of the present application. As shown in FIG. 1, the control method comprises: step S11 and step S12.

In step S 11, it is detected whether a single pedal control mode is activated.

In particular, the single pedal control mode is generally integrated into a vehicle control module, which generally controls the current vehicle to either adopt the single pedal to control the acceleration and braking, or adopt an accelerator pedal or a brake pedal to control the acceleration and braking. Thus, the vehicle control module can be used to detect whether a switch of the single pedal control mode has sent a start instruction, for example, if it is detected that the signal sent from the switch of the single pedal control mode is 1, that is, the start instruction is sent, it means that the single pedal control mode is activated. If it is detected that the signal sent from the switch of the single pedal control mode is 0, that is, no start instruction is sent, it means that the single pedal control mode is not activated.

In step S12, when it is detected the signal pedal control mode is activated, the new energy vehicle is controlled to enter a creep mode according to at least one of a gear position of the new energy vehicle, an action of a brake pedal of the new energy vehicle, and a speed of new energy vehicle.

In particular, according to embodiments of the present application, the controlling of the new energy vehicle to enter the creep mode is mainly based on the gear position, the action of the brake pedal, and/or the speed of the new energy vehicle, and thus can be divided into the following ways:
First, in the case that the gear position of the new energy vehicle is a reverse gear position (that is, an R gear); the new energy vehicle is controlled to enter the creep mode. That is, the driver's driving intention is to reverse, and in such condition, the creep mode is more suitable.

Second, in the case that the gear position of the new energy vehicle is shifted to a drive gear position (that is, the gear position is shifted from the reverse gear position to the drive gear position, or from a neutral gear position to the drive gear position), the new energy vehicle is controlled to enter the creep mode. That is, the driver's driving intention is to start driving, in such condition, it is proper to control the new vehicle to enter the creep mode firstly, and then adjust according to the operations of the driver.

Third, in the case that the gear position of the new energy vehicle is a drive gear position, the speed is smaller than a preset speed, and after the brake pedal is switched from a depressed state to a fully released state, the new energy vehicle is controlled to enter the creep mode.

The above third way can also be divided into three conditions. As shown in FIG. 2, the preset speed may be, but is not limited to, 10 m/s. The brake pedal is depressed when the vehicle speed is still greater than 10 m/s, and is fully released when the vehicle speed is smaller than 10 m/s, in such condition, the driver's driving intention is to drive the vehicle to travel slowly, and the new energy vehicle will enter the creep mode after a short period of deceleration.

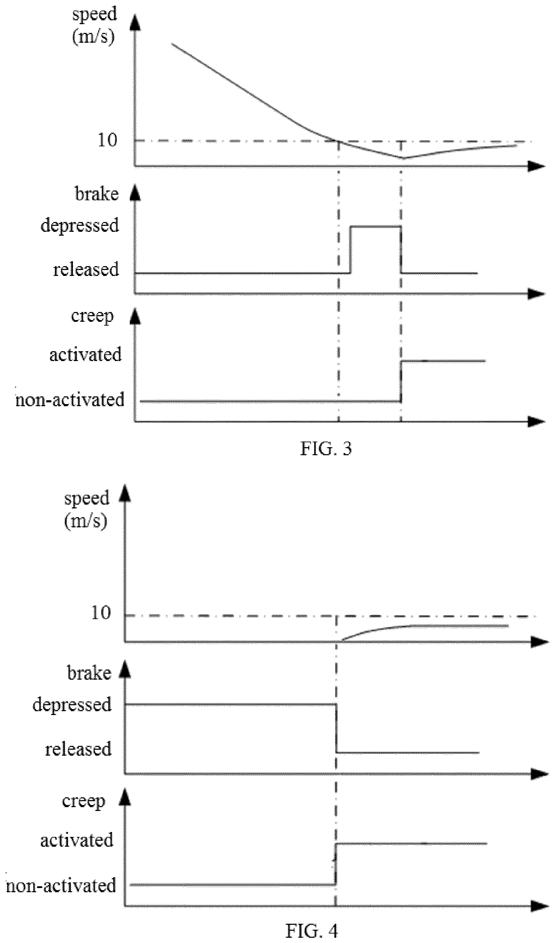

As shown in FIG. 3, the brake pedal is depressed when the vehicle speed is smaller than 10 m/s, and is fully released later. In such condition, the driver's driving intention is to drive the vehicle to travel slowly, and the new energy vehicle will enter the creep mode after a short period of deceleration.

As shown in FIG. 4, the vehicle is firstly in a stopped state, that is, the vehicle speed is 0. Before the vehicle starts, the brake pedal is depressed, and later, fully released. In such condition, the driver's driving intention is to start driving, and the new energy vehicle will enter the creep mode firstly, which is adjusted later according to the driving operation.

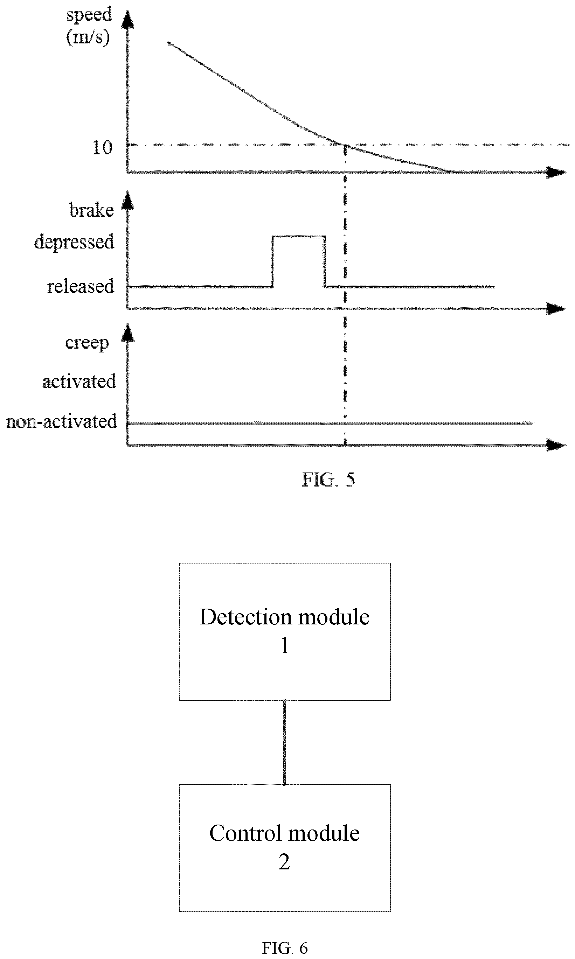

In addition, the control method of the present application further provides the condition not entering the creep mode:
As shown in FIG. 5, if the brake pedal is depressed when the vehicle speed is greater than 10 m/s, and is fully released when the vehicle speed is still greater than 10 m/s, in such condition, the new energy vehicle will not enter the creep mode, and if no further instructions are given subsequently, the new energy vehicle will directly decelerate to the vehicle speed of 0, and will be stopped.

In the case that the gear position of the new energy vehicle is a drive gear position, and after an accelerator pedal of the new energy vehicle is switched from a depressed state to a fully released state, the new energy vehicle is controlled to be prohibited from entering the creep mode. If no further instructions are given subsequently, the new energy vehicle will directly decelerate to the vehicle speed of 0, and will be stopped.

FIG. 6 is a schematic block diagram of an apparatus for controlling a new energy vehicle according to an embodiment of the present application. As shown in FIG. 6, the control apparatus comprises: a detection module 1 and a control module. The detection module 1 is configured for detecting whether a single pedal control mode is activated. The control module 2 is configured for controlling the new energy vehicle to enter a creep mode according to at least one of a gear position of the new energy vehicle, an action of a brake pedal of the new energy vehicle, and a speed of new energy vehicle, when it is detected the signal pedal control mode is activated.

Optionally, the control module 2 is further configured for: controlling the new energy vehicle to enter the creep mode, in the case that the gear position of the new energy vehicle is a reverse gear position.

Optionally, the control module 2 is further configured for: controlling the new energy vehicle to enter the creep mode, in the case that the gear position of the new energy vehicle is a drive gear position, the speed is smaller than a preset speed, and after the brake pedal is switched from a depressed state to a fully released state.

Optionally, the control module 2 is further configured for: controlling the new energy vehicle to enter the creep mode, in the case that the gear position of the new energy vehicle is shifted to the drive gear position.

Optionally, the control module 2 is further configured for: prohibiting the new energy vehicle from entering the creep mode, in the case that the gear position of the new energy vehicle is a drive gear position, and after an accelerator pedal of the new energy vehicle is switched from a depressed state to a fully released state.

Embodiments of the present application further provide a new energy vehicle, comprising the above-described apparatus for controlling a new energy vehicle.

Embodiments of the present application further provide a machine-readable storage medium, storing instructions configured for causing a machine to execute the above-described method for controlling a new energy vehicle.

Compared with the existing technology, the above-described control apparatus for a new energy vehicle has the same advantages as the above-described control method for a new energy vehicle, which will not be repeated herein.

The above descriptions are only preferred embodiments of the present application, and are not intended to limit the present application. Any modifications, equivalent replacements, improvements, etc. made within the spirit and principles of the present application shall be included within the scope of the present application.

## Claims

1. A method for controlling a new energy vehicle, comprising:
detecting whether a single pedal control mode is activated; and
controlling the new energy vehicle to enter a creep mode according to at least one of a gear position of the new energy vehicle, an action of a brake pedal of the new energy vehicle, and a speed of new energy vehicle, when it is detected the signal pedal control mode is activated.

2. The method for controlling a new energy vehicle according to claim 1, wherein said controlling the new energy vehicle to enter a creep mode according to at least one of a gear position of the new energy vehicle, an action of a brake pedal of the new energy vehicle, and a speed of new energy vehicle comprises:
controlling the new energy vehicle to enter the creep mode, in the case that the gear position of the new energy vehicle is a reverse gear position.

3. The method for controlling a new energy vehicle according to claim 1, wherein said controlling the new energy vehicle to enter a creep mode according to at least one of a gear position of the new energy vehicle, an action of a brake pedal of the new energy vehicle, and a speed of new energy vehicle comprises:
controlling the new energy vehicle to enter the creep mode, in the case that the gear position of the new energy vehicle is a drive gear position, the speed is smaller than a preset speed, and after the brake pedal is switched from a depressed state to a fully released state.

4. The method for controlling a new energy vehicle according to claim 1, wherein said controlling the new energy vehicle to enter a creep mode according to at least one of a gear position of the new energy vehicle, an action of a brake pedal of the new energy vehicle, and a speed of new energy vehicle comprises:
controlling the new energy vehicle to enter the creep mode, in the case that the gear position of the new energy vehicle is shifted to the drive gear position.

5. The method for controlling a new energy vehicle according to claim 1, further comprising:
prohibiting the new energy vehicle from entering the creep mode, in the case that the gear position of the new energy vehicle is a drive gear position, and after an accelerator pedal of the new energy vehicle is switched from a depressed state to a fully released state.

6. An apparatus for controlling a new energy vehicle, comprising: a detection module and a control module;
wherein
the detection module is configured for detecting whether a single pedal control mode is activated; and
the control module is configured for controlling the new energy vehicle to enter a creep mode according to at least one of a gear position of the new energy vehicle, an action of a brake pedal of the new energy vehicle, and a speed of new energy vehicle, when it is detected the signal pedal control mode is activated.

7. The apparatus for controlling a new energy vehicle according to claim 6, wherein the control module is further configured for:
controlling the new energy vehicle to enter the creep mode, in the case that the gear position of the new energy vehicle is a reverse gear position.

8. The apparatus for controlling a new energy vehicle according to claim 6, wherein the control module is further configured for:
controlling the new energy vehicle to enter the creep mode, in the case that the gear position of the new energy vehicle is a drive gear position, the speed is smaller than a preset speed, and after the brake pedal is switched from a depressed state to a fully released state.

9. The apparatus for controlling a new energy vehicle according to claim 6, wherein the control module is further configured for:
controlling the new energy vehicle to enter the creep mode, in the case that the gear position of the new energy vehicle is shifted to the drive gear position.

10. The apparatus for controlling a new energy vehicle according to claim 6, wherein the control module is further configured for:
prohibiting the new energy vehicle from entering the creep mode, in the case that the gear position of the new energy vehicle is a drive gear position, and after an accelerator pedal of the new energy vehicle is switched from a depressed state to a fully released state.

11. A new energy vehicle, comprising the apparatus for controlling a new energy vehicle according to any one of claims 6-10.

12. A machine-readable storage medium, storing instructions configured for causing a machine to execute the method for controlling a new energy vehicle according to any one of claims 1-5.
